## Europäisches Patentamt

## European Patent Office

## Office européen des brevets

(11) Veröffentlichungsnummer: **0 133 196**
**B1**

# EUROPÄISCHE PATENTSCHRIFT

(12)

(45) Veröffentlichungstag der Patentschrift:
**08.04.87**

(21) Anmeldenummer: **84103874.8**

(22) Anmeldetag: **07.04.84**

(51) Int. Cl.⁴: **B 65 B 51/22**, B 65 B 59/00

(54) Vorrichtung zum Falten und Verschliessen des Kopfes einer Faltschachtel.

(30) Priorität: **22.06.83 DE 3322402**

(43) Veröffentlichungstag der Anmeldung:
**20.02.85 Patentblatt 85/8**

(45) Bekanntmachung des Hinweises auf die Patenterteilung:
**08.04.87 Patentblatt 87/15**

(84) Benannte Vertragsstaaten:
**FR GB IT NL**

(56) Entgegenhaltungen:
**DE-A-2 520 400**
**DE-A-2 812 138**

(73) Patentinhaber: **PKL Verpackungssysteme GmbH,
Heerdter Sandberg 32, D-4000 Düsseldorf (DE)**

(72) Erfinder: **Knuppertz, Werner, Otto- Hahn- Strasse
20, D-4000 Düsseldorf (DE)**
Erfinder: **Stohanzl, Rudolf, W. Gräser Strasse 20,
D-4048 Grevenbroich (DE)**

(74) Vertreter: **Pfeiffer, Helmut, Jagenberg AG
Patentwesen Kennedydamm 15- 17 Postfach 1123,
D-4000 Düsseldorf 30 (DE)**

EP 0 133 196 B1

LIBER, STOCKHOLM 1987

## Beschreibung

Die Erfindung bezieht sich auf eine Vorrichtung zum Falten und Verschließen des Kopfes einer von einer innenseitig mit einer thermoplastischen Kunststoffschicht überzogenen Kartonbahn bzw. einer aus einem Zuschnitt gebildeten Faltschachtel in einer Falt- und Preß-Schweißstation, deren Falt- und Preß-Schweißwerkzeuge aus einem Paar zangenartig aufeinander zu bewegbaren Backen bestehen, deren eine Backe an einem schwenkbeweglich gelagerte, Hebel und deren andere Backe zusammen mit einem mit der ersten Backe zusammenarbeitenden Schweißelement an einem gemeinsamen schwenkbeweglich aufgehängten Träger befestigt sind wobei durch einen Antriebshebel für den schwenkbeweglich aufgehängten Träger und einen zum Antriebshebel sich etwa parallel erstreckenden, an einem Festpunkt der Vorrichtung angelenkten Schwenkhebel ein Parallelkurbelgetriebe gebildet ist, welches Getriebe den Schwingungserzeuger während des Schweiß- bzw. Preßvorgangs eine annähernd rechtwinklig geradlinige Bewegung zur ersten Backe ausführen läßt.

Eine solche Vorrichtung geht beispielsweise aus der deutschen Offenlegunsschrift 28 12 138 hervor. Bei dieser bekannten Vorrichtung zum Falten und Verschließen des Kopfes einer Faltschachtel ist für die Faltwerkzeuge und die Preß- Schweißwerkzeuge ein gemeinsamer Antrieb in Gestalt einer schwingenden Steuerkurve vorhanden. Die Bewegungen und die Krafteinleitung für das Falten und Preßschweißen wird durch an der Außenkontur der Steuerkurve anliegende Druckrollen auf den die Falt- und Preßwerkzeuge tragenden Hebel und Träger übertragen. Infolge des gemeinsamen Antriebs für die Falt- und Preß-Schweißwerkzeuge müssen die Antriebs- und Steuerelemente im wesentlichen oberhalb der auf einem Transportmittel taktweise vorwärts bewegten Faltschachteln angeordnet werden. Durch die oberhalb der geöffneten und zu verschließenden Faltschachteln angeordneten mechanischen Antriebs- und Steuerelemente ist nur schwer sicherzustellen, daß die Innenfläche der noch geöffneten Faltschachtel durch Produktreste nicht verschmutzt, da zwangsläufig viele für die Reinigung schwer zugängliche Stellen vorhanden sind. Ferner können durch den gemeinsamen Antrieb der Falt- bzw. Preßwerkzeuge die Bewegungen der Werkzeuge nicht unabhängig voneinander ausgebildet werden, so daß schon bei einem geringfügigen Verschleiß, z. B. an den Kraftübertragungsrollen, eine Veränderung der Lage der Preßwerkzeuge zueinander eintritt, was sich nachteilig auf die Qualität der Schweißnaht auswirkt. Darüber hinaus werden bei der speziellen Konzeption der bekannten Vorrichtung die Lagerwelle für die gemeinsame Steuerkurve und eine weitere Lagerwelle für die den Hebel und den Träger tragende Arme während des Preßvorgangs sehr stark belastet.

Der Erfindung liegt die Aufgabe zugrunde, eine Vorrichtung zum Falten und Verschließen des Kopfes einer Faltschachtel zu schaffen, die sich durch einen einfachen, Aufbau des Antriebs- und Steuermechanismus und durch eine bessere bzw. günstigere Kraftaufnahme während des Preß-Schweißvorgangs auszeichnet.

Diese Aufgabe wird durch die im kennzeichnenden Teil des Anspruchs 1 angegebenen Merkmale gelöst. Durch die vorgeschlagene Lösung wird der Antriebs- und Steuermechanismus für die Falt- und Schweiß-Preßwerkzeuge so vereinfacht bzw. ausgebildet, daß oberhalb der geöffneten bzw. zu verschließenden Faltschachtel keine die Reinigung beeinträchtigenden Antriebs- und Steuerelemente vorhanden sind, so daß eine Verschmutzung der Innenseiten der geöffneten Faltschachtel nicht mehr zu befürchten ist. Durch den unabhängigen Antrieb für die Faltwerkzeuge und die Schweiß-Preßwerkzeuge können diese auch individuell zueinander eingestellt werden, wodurch die Qualität der Schweißnaht verbessert wird. Ferner ermöglicht der unmittelbare Antrieb des Hebels und des Trägers über die jeweils zur Schwenklagerung dienende Welle eine bessere Kraftaufnahme, insbesondere dann, wenn durch die zum Antrieb dienende Welle des Trägers zusammen mit einem darauf schwenkbeweglich gelagerten Schwenkhebel und einen sich etwa parallel dazu erstreckenden, an einem Festpunkt der Vorrichtung angelenkten Schwenkhebel ein Parallelkurbelgetriebe gebildet wird, welches dem Träger während des Schweiß- bzw. Preßvorgangs - wie an sich bekannt - eine annähernd rechtwinklig geradlinige Bewegung zur am Hebel befestigten Backe ausführen läßt.

Besonders vorteilhaft ist es für die vorliegende Erfindung, wenn eine Kontaktstelle zwischen der Backe am Hebel und der weiteren Backe am Träger und ein Angriffspunkt zur Krafteinleitung für den Preß- Schweißvorgang auf der Wirkungslinie der Preß- Schweißkraft angeordnet sind. Durch diese geschickte Einleitung der Preßkraft wird sichergestellt, daß an der zur Schwenklagerung und zum Antrieb dienenden Welle des die erste Backe tragenden Hebels keine Belastungen entstehen.

Zur Krafteinleitung während des Schweiß-Preßvorgangs ist vorzugsweise ein Druckzylinder vorgesehen. Wenn der Druckzylinder am Träger befestigt ist, wird erreicht, daß die während des Preßvorgangs entstehenden Kräfte nicht auf die zur Schwenklagerung und zum Antrieb des Trägers dienende Welle und auch nicht auf die weiteren Gelenkpunkte des Parallelkurbelgetriebes übertragen werden.

Da somit auf die zum Antrieb des Hebels und des Trägers dienenden Wellen keine Belastungen ausgeübt werden, bleiben mithin auch die äußeren, mit den Wellen in Verbindung stehenden Antriebe für die Werkzeuge während des Preßvorgangs belastungsfrei. Das ist besonders vorteilhaft für mehrbahnige Ausführungen, wo also in mehreren Reihen Packungen nebeneinander gefaltet und verschlossen werden.

Es gibt verschiedene Möglichkeiten, den Druckzylinder am Träger zu befestigen. Auch die Lage spielt keine spezielle Rolle. Sofern der Druckzylinder nicht konzentrisch zur Wirkungslinie der Preßkraft an einem den Falt- und Preßwerkzeugen abgewandten Schenkel des Trägers angeordnet werden soll, ist zweckmäßigerweise zwischen dem Druckzylinder und dem auf der Schweiß- bzw. Preßkraft-Wirkungslinie liegenden Angriffspunkt der Krafteinleitung ein Kraftübertragungsmechanismus zwischengeschaltet.

Die Ausbildung dieses Kraftübertragungsmechanismus ist ebenfalls an sich beliebig und kann in der verschiedensten Weise ausgestaltet werden.

Zweckmäßigerweise ist der Kraftübertragungsmechanismus als auf dem Träger um ein Schwenklager schwenkbeweglich gelagerter, zweiarmiger Umlenkhebel ausgebildet, dessen einer Arm über ein Verbindungsgestänge mit einem kolben- oder membranartigen Verstellelement des Druckzylinders verbunden ist und dessen anderer Arm mit einem die Verbindung bzw. Anlage zum die erste Backe tragenden Hebel herstellenden Teil zusammenwirkt.

Dabei kann der Anlageteil als nasenförmiger Fortsatz des im wesentlichen Z-förmig gestalteten Hebels ausgebildet sein.

Die Anordnung kann aber auch so getroffen sein, daß zwischen dem Anlageteil und dem einen Arm des Umlenkhebels eine Rolle vorgesehen ist und daß der damit zusammenwirkende Arm des Umlenkhebels als Kurvensegment ausgebildet ist. Durch entsprechende Ausbildung des Kurvensegments tritt am Druckzylinder während des Bewegungsvorgangs nur ein geringer Hub auf, so daß der Einbau eines Kurzhubzylinders ermöglicht wird.

Eine weitere Möglichkeit besteht darin, daß der Verbindungsteil zwischen dem Hebel und dem Arm des Umlenkhebels als gelenkig angeschlossener Verbindungshebel ausgebildet ist.

Bevorzugte Ausführungsbeispiele der Erfindung sind in der Zeichnung dargestellt und werden im folgenden näher erläutert.

Es zeigen:
Fig 1 eine schematische Darstellung einer Vorrichtung zum Falten und Verschließen des Kopfes einer Faltschachtel in Seitenansicht,
Fig. 2 bis 4 Prinzipbilder bezüglich der Krafteinleitung während des Preßvorgangs,
Fig. 5 eine abgewandelte Ausführungsform der Falt- und Schließvorrichtung,
Fig. 6 eine weitere abgeänderte Ausführungsvariante der Vorrichtung und
Fig. 7 eine dritte Ausführungsform der Falt- und Schließvorrichtung.

Auf einem Transportband 1 werden vorgefertigte, mit Flüssigkeit gefüllte Faltschachteln 2 mit noch nicht verschlossenem Kopf in Reihe und aufrechtstehend und mit quer zur Transportrichtung verlaufenden, zu verschweißenden Stegnahtbereichen einer kombinierten Falt- und Preß-Schweißstation 3 in Richtung des Pfeiles 4 zugeführt. Dieser Transport erfolgt schrittweise. Das Vorhandensein einer Faltschachtel 2 unter der Preßstation kann durch einen Fühler festgestellt werden, der über eine Steuereinrichtung das Einschalten der Preß-Schweißstation 3 bewirkt.

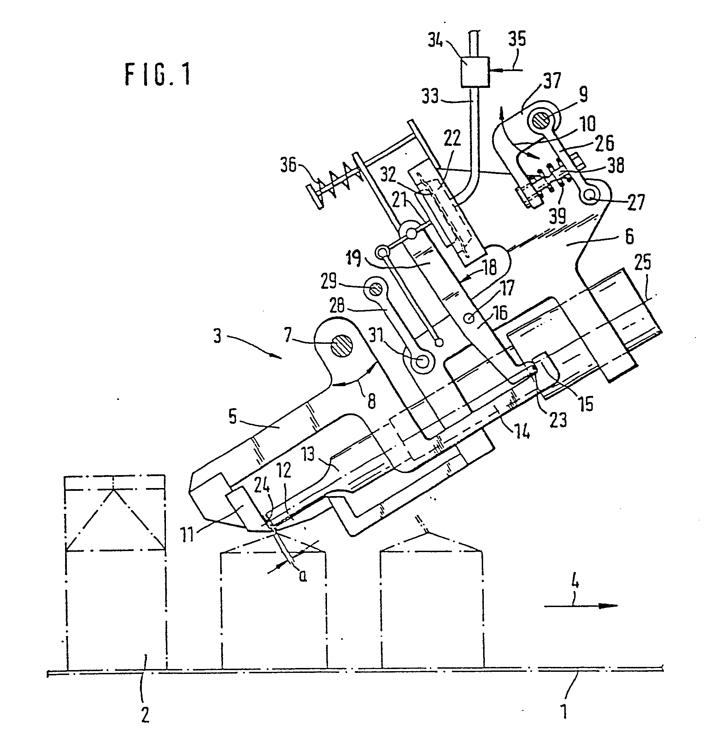

Die Vorrichtung zum Falten und Verschließen der Faltschachtel 2 besteht im wesentlichen aus einem Hebel 5 und einem Träger 6, wobei der Hebel um eine Welle 7 schwenkbeweglich gelagert und von dieser im Sinne des Pfeiles 8 hin- und herbewegbar antreibbar ist, während der Träger 6 von einer Welle 9 im Sinne des Pfeils 10 antreibbar ist. Die Wellen 7 und 9 stehen mit nicht dargestellten äußeren Antrieben in Verbindung. Das vordere freie Ende des Hebels 5 trägt eine Backe 11. Ebenso ist am vorderen freien Ende des Trägers 6 eine Backe 12 angeordnet. Etwas oberhalb der Backe 12 liegt das vordere Ende eines als Schweißwerkzeug ausgebildeten Schwingungserzeugers 13 für Ultraschallwellen, um den Stegnahtbereich der Faltschachtel 2 zu erwärmen und miteinander zu verschweißen. Der Schwingungserzeuger 13 ist in dem Träger 6 gelagert. In der in Figur 1 dargestellten Faltstellung der Vorrichtung befindet sich zwischen der Backe 11 und der Backe 12 bzw. dem vorderen Ende des Schwingungserzeugers 13 ein freier Abstand a.

Der Hebel 5 ist im wesentlichen Z-förmig ausgebildet und besitzt einen hinteren nasenförmigen Fortsatz 14 mit einer Anlageschulter 15. Die Anlageschulter 15 wirkt mit dem einen Arm 16 eines um eine Schwenklagerung 17 am Träger 6 gelagerten Umlenkhebels 18 zusammen, dessen anderer Arm 19 über ein Gelenkgestänge 21 mit einem Druckzylinder 22 in Verbindung steht. Zwischen der Anlageschulter 15 und dem Arm 16 des Umlenkhebels 18 liegt ein Angriffspunkt 23 zur Krafteinleitung während des Preß- und Schweißvorgangs. Der Angriffspunkt 23 der Krafteinleitung und eine Kontaktstelle 24 zwischen der am Hebel 5 befestigten Backe 11 und dem Schwingungserzeuger 13 liegt auf der Preßkraftwirkungslinie 25. Diese Preßkraftwirkungslinie 25 ist im wesentlichen durch die schwenkbewegliche Aufhängung des Trägers 6 vorgegeben. Die Aufhängung in Gestalt eines Parallelkurbelgetriebes wird von der Welle 9, einem Schwenkhebel 26, einem Lagerpunkt 27, einem weiteren Schwenkhebel 28 sowie dessen Lagerstellen 29 und 31 gebildet.

Der Druckzylinder 22 besitzt ein kolbenartiges oder membranartiges Verstellelement 32 und steht über eine Zulaufleitung 33 sowie ein Steuerventil 34 mit einer von einer Druckluftquelle kommenden Druckleitung 35 in Verbindung. Der Druckzylinder 22 ist am Träger 6 befestigt und wirkt entgegen einer Druckfeder 36.

Im Bereich der Welle 9 des Trägers 6 bzw. des Schwenkhebels 26 ist eine Überhub- und Bruchsicherung angeordnet, und zwar in Gestalt eines Mitnehmers 37, eines Bolzens 38 und einer Feder 39.

Die Wirkungsweise der erfindungsgemäßen Falt- und Schließvorrichtung ist wie folgt:

Die Bewegungseinleitung für den Hebel 5 erfolgt formschlüssig über die Welle 7 und für den Träger 6 unter Zwischenschaltung des Schwenkhebels 26 über die Welle 9, den Mitnehmer 37 und den Bolzen 38 in der Weise, daß zwischen der Backe 11 und dem Schwingungserzeuger 13 bzw. der Backe 12 des Trägers 6 der Abstand a eingehalten wird.

Nach Erreichen dieser Stellung wird der Druckzylinder 22 mit Druckluft beaufschlagt, wodurch über das Gelenkgestänge 21 der Umlenkhebel 18 im Gegenuhrzeigersinn verschwenkt wird, bis er mit seinem unteren Arm 16 an der Anlageschulter 15 des Fortsatzes 14 im Angriffspunkt 23 auf der Preßkraftwirkungslinie 25 zur Anlage gelangt. Hier stützt sich dann der Umlenkhebel 18 ab, so daß bei weiterer Druckbeaufschlagung über den Druckzylinder 22 der Umlenkhebel 18 und infolge seiner schwenkbeweglichen Lagerung 17 am Träger 6 dieser in Richtung auf den Hebel 5 zubewegt wird. Hierdurch wird bei Auftreffen auf den Stegnahtbereich der Faltschachtel 2 die zum Schweißen notwendige Preßkraft aufgebracht und über das Schweißwerkzeug bzw. den Schwingungserzeuger 13 der Stegnahtbereich der Faltschachtel 2 verschweißt.

Da bei der vorbeschriebenen Bewegung des Trägers 6 der Mitnehmer 37 in Ruhe ist, wird der dabei entstehende Überhub des Hebels 26 in der Feder 39 aufgenommen.

Nach Ablauf der erforderlichen Schweiß- und Abkühlzeit wird der Druckzylinder 22 entlüftet und durch die Wirkung der Feder 39 der Träger 6 mit dem Schwingungserzeuger 13 wieder auf den Abstand a gebracht, so daß das Öffnen der Werkzeuge über die Wellen 7 und 9 ohne Beschädigung der Faltschachtel erfolgen kann.

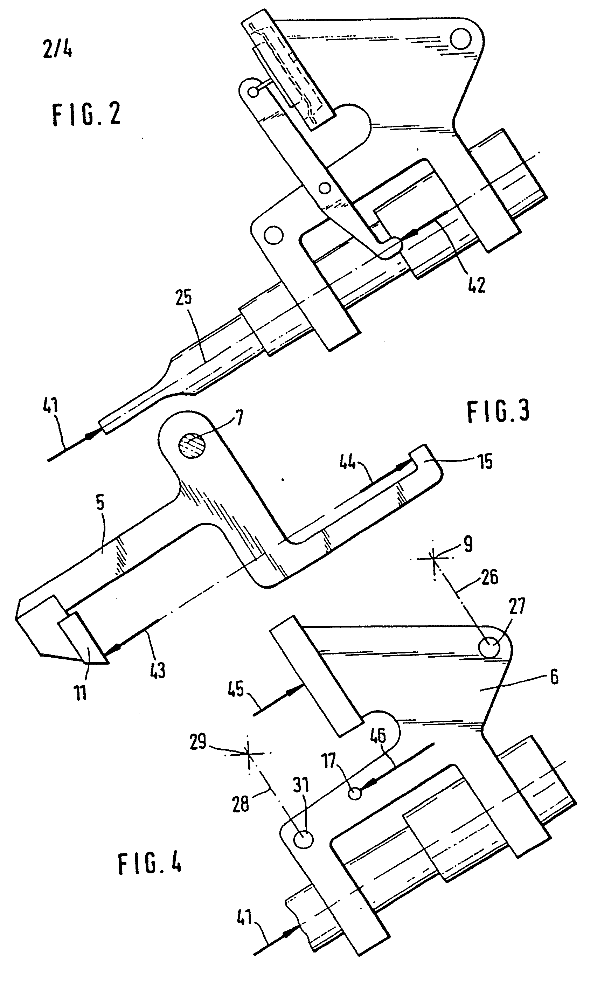

Während des Schweiß-Preßvorgangs liegt der Angriffspunkt 23 der Krafteinleitung und die Kontaktstelle 24 zwischen der Backe 11 und dem Schwingungserzeuger 13 auf der Preßkraftwirkungslinie 25, so daß sich ein Kräfteverhältnis ergibt, wie es in Fig. 2 dargestellt ist. Das bedeutet, daß die Kräfte 41 und 42, die auf der Wirkungslinie 25 einmal in Richtung auf den Schwingungserzeuger und zum anderen auf den Umlenkhebel 18 einwirken, sich gegenseitig aufheben, so wie das gemäß Fig. 3 auch für die auf die Backe 11 wirksame Kraft 43 und die auf die Anlageschulter 15 wirksame Kraft 44 gilt. Das hat zur Folge, daß die zur Schwenklagerung und zum Antrieb dienende Welle 7 des Hebels 5 völlig unbelastet bleibt, d. h., keinerlei Kräfte aufzunehmen braucht.

Wie aus Fig. 4 hervorgeht, gilt das auch für den Träger 6, da die auf den Druckzylinder 22 einwirkende Reaktionskraft 45 und die oben bereits genannte Kraft 41 gleich groß der entgegengesetzt wirkenden Kraft 46 sind, die auf das Schwenklager 17 des Trägers 6 einwirkt. Das hat zur Folge, daß die für die Schwenklagerung und den Antrieb vorgesehene Welle 9 sowie der Lagerpunkt 27 sowie die Lagerstellen 31 und 29 des weiteren Schwenkhebels 28 ebenfalls belastungsfrei sind, also keinerlei Kräfte aufzunehmen brauchen.

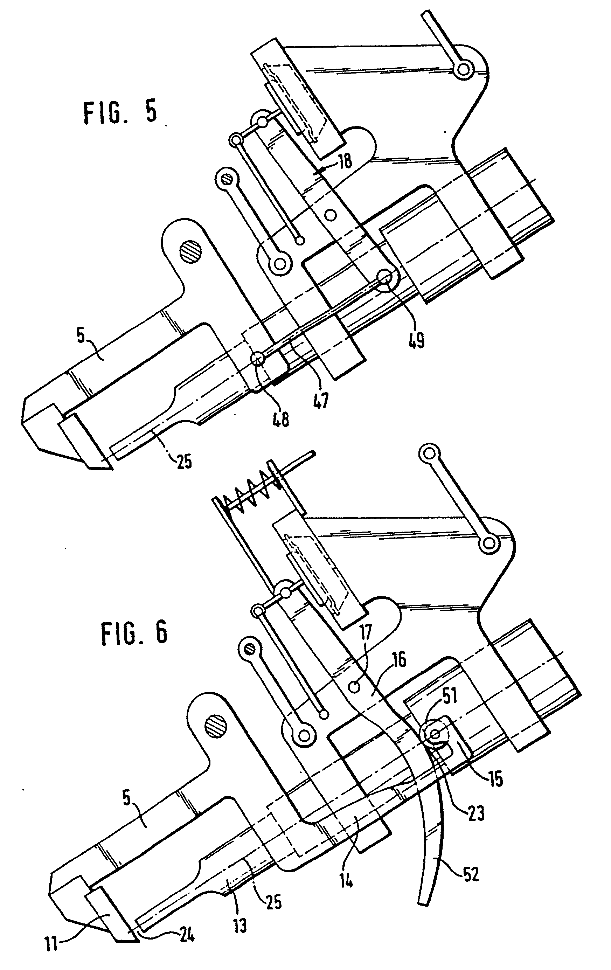

Die in Fig. 5 dargestellte Ausführungsform der Falt- und Schließvorrichtung entspricht im wesentlichen derjenigen der Fig. 1, lediglich mit der Ausnahme, daß der Hebel 5 und der Umlenkhebel 18 etwas anders ausgestaltet sind, nämlich derart, daß sie über eine Verbindungsstange 47 miteinander verbunden sind und zwar über die Gelenkstellen 48 und 49.

Diese Verbindungsstange 47 liegt während des Preß- Schweißvorganges auf der Preßkraftwirkungslinie 25 und übernimmt dabei die Funktion des nasenförmigen Fortsatzes 14 und des Armes 16 des Umlenkhebels 18 entsprechend der Ausführung in Fig. 1.

Bei der Ausführungsvariante gemäß Fig 6 entspricht der Hebel 5 im Prinzip wieder der Ausführung gemäß Fig 1, mit dem Unterschied, daß an der Anlageschulter 15 des Fortsatzes 14 eine Rolle 51 vorgesehen ist und daß der Arm 16 ein Kurvensegment 52 aufweist, an das die Rolle 51 anliegt.

Der Angriffspunkt 23 der Krafteinleitung und die Kontaktstelle 24 zwischen der Backe 11 und dem Schwingungserzeuger 13 liegt jeweils wiederum auf der Preßkraftwirkungslinie 25, so daß die prinzipielle Funktion, wie oben erläutert, auch hier beibehalten wird.

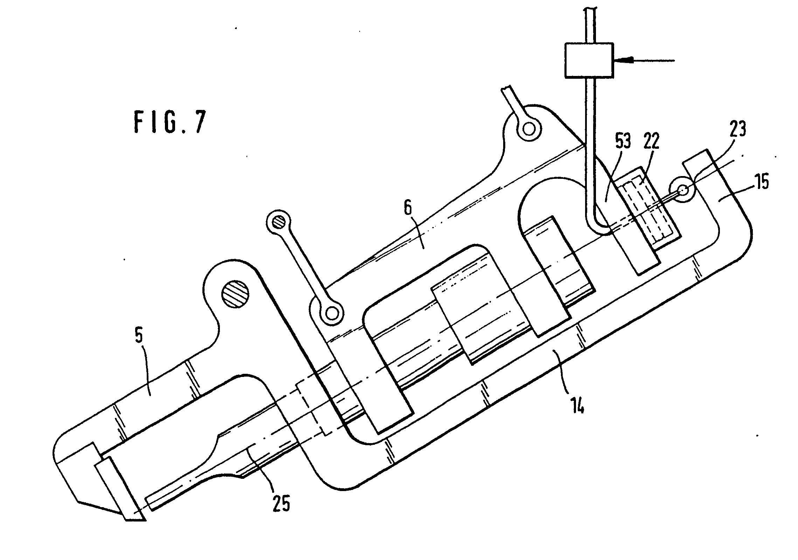

Schließlich ist in Fig. 7 eine Ausführungsform dargestellt, bei der der Fortsatz 14 des Hebels 5 mit der Anlageschulter 15 bis hinter einen zusätzlichen Schenkel 53 des Trägers 6 verlängert ist und wobei zwischen der Anlageschulter 15 und dem Schenkel 53 des Trägers 6 unmittelbar der Druckzylinder 22 angeordnet ist, so daß dieser konzentrisch zur Preßkraftwirkungslinie 25 liegt. Dabei ist der Krafteinleitungspunkt 23 wiederum auf der Preßkraftwirkungslinie 25 so angeordnet, daß hier die o. g. Vorteile hinsichtlich der Krafteinleitung ebenfalls gelten. Es sei noch vermerkt, daß die oben erwähnte Überhubsicherung zugleich als Bruchsicherung zwischen dem Schwenkhebel 26 und dem Mitnehmer 37 ausgebildet ist, so daß bei unzulässig hohen Kräften der Bolzen 38 reißt.

Bei mehreren, z. B. parallel zueinander arbeitenden Trägern kann auch eine Bruchsicherung in Form einer Überwachung des Synchronlaufs des Trägers mittels Fühler vorhanden sein.

Es versteht sich, daß das Schweißwerkzeug nicht unbedingt als Schwingungserzeuger für Ultraschallwellen ausgebildet zu sein braucht, sondern zum Verschweißen des Stegnahtbereichs der Faltschachtel sich auch eine Heißluftschweißung eignet.

**Patentansprüche**

1. Vorrichtung zum Falten und Verschließen des Kopfes einer von einer innenseitig mit einer thermoplastischen Kunststoffschicht überzogenen Kartonbahn bzw. aus einem Zuschnitt gebildeten Faltschachtel in einer Falt- und Preß-Schweißstation (3), deren Falt- und Preß-Schweißwerkzeuge aus einem Paar zangenartig aufeinanderzu bewegbaren Backen (11, 12) bestehen, deren erste Backe (11) an einem schwenkbeweglich gelagerten Hebel (5) und deren andere Backe (12) zusammen mit einem mit der ersten Backe (11) zusammenarbeitenden Schwingungserzeuger (13) an einem gemeinsamen, schwenkbeweglich aufgehängten Träger (6) befestigt sind, wobei durch einen Antriebshebel (26) für den schwenkbeweglich aufgehängten Träger (6) und einen zum Antriebshebel (26) sich etwa parallel erstreckenden, an einem Festpunkt (29) der Vorrichtung angelenkten Schwenkhebel (28) ein Parallelkurbelgetriebe gebildet ist, welches Getriebe den Schwingungserzeuger (13) während des Schweiß- bzw. Preßvorgangs eine annähernd rechtwinklig geradlinige Bewegung zur ersten Backe (11) ausführen läßt, dadurch gekennzeichnet, daß der die erste Backe (11) tragende Hebel (5) und der den Schwingungserzeuger (13) tragende Träger (6) unabhängig voneinander durch als Schwenklager dienende Wellen (7, 9) antreibbar sind, daß eine Kontaktstelle (24) zwischen der ersten Backe (11) und der Backe des Schwingungserzeugers (13) und ein Angriffspunkt (23) am Hebel (5) zur Krafteinleitung für den Preß-Schweißvorgang auf der geradlinigen Preßkraft-Wirkungslinie (25) des Trägers (6) vorgesehen sind und daß zur Krafteinleitung ein Druckzylinder (22) angeordnet ist, dessen Kraft über einen Kraftübertragungsmechanismus (18) auf den Angriffspunkt (23) übertragbar ist.

2. Vorrichtung nach Anspruch 1, dadurch gekennzeichnet, daß der Druckzylinder (22) am Träger (6) befestigt ist.

3. Vorrichtung nach den Ansprüchen 1 und 2, dadurch gekennzeichnet, daß der Kraftübertragungsmechanismus als auf dem Träger (6) um ein Schwenklager (17) schwenkbeweglich gelagerter, zweiarmiger Umlenkhebel (18) ausgebildet ist, dessen einer Arm (19) über ein Verbindungsgestänge (21) mit einem kolben- oder membranartigen Verstellelement (32) des Druckzylinders (22) verbunden ist und dessen anderer Arm (16) mit einem eine Verbindung bzw. Anlage zum die erste Backe (11) tragenden Hebel (5) herstellenden Teil (15, 51) zusammenwirkt.

4. Vorrichtung nach einem oder mehreren der Ansprüche 1 bis 3, dadurch gekennzeichnet, daß der Anlageteil als mit einer Anlageschulter (15) versehener nasenförmiger Fortsatz (14) des im wesentlichen z-förmig gestalteten Hebels (5) ausgebildet ist.

5. Vorrichtung nach einem oder mehreren der Ansprüche 1 bis 3, dadurch gekennzeichnet, daß zwischen dem Anlageteil und dem einen Arm (16) eine Rolle (51) vorgesehen ist und daß der damit zusammenwirkende Arm (16) des Umlenkhebels (18) ein Kurvensegment (52) aufweist.

6. Vorrichtung nach einem oder mehreren der Ansprüche 1 bis 3, dadurch gekennzeichnet, daß der Verbindungsteil zwischen dem Hebel (5) und dem Arm (16) des Umlenkhebels (18) als über Gelenkpunkte (48, 49) angeschlossener Verbindungshebel (47) ausgebildet ist.

7. Vorrichtung nach den Ansprüchen 1 und 2, dadurch gekennzeichnet, daß der Druckzylinder (22) konzentrisch zur Wirkungslinie (25) der Preßkraft an einem den Falt- und Schweiß-Preßwerkzeugen (11, 12, 13) abgewandten Schenkel (53) des Trägers (6) angeordnet ist.

8. Vorrichtung nach einem oder mehreren der Ansprüche 1 bis 7, gekennzeichnet durch eine von einem Bolzen (35) und einer diesen umgebenden, sich einerseits am auf der Welle (9) gelagerten Schwenkhebel (26) und andererseits an einem auf der Welle (9) aufgekeilten Mitnehmer (37) abstützenden Feder (39) gebildete Überhub- und Bruchsicherung.

**Claims**

1. Appliance for folding and closing the head of a folding box, formed from a cardboard sheet covered on the inside with a thermoplastic layer or from a blank, in a folding and pressure-welding station (3), of which the folding and pressure-welding tools consist of a pair of jaws (11, 12) which are movable towards one another in the manner of tongs and of which the first jaw (11) is fastened to a pivotably mounted lever (5) and the other jaw (12), together with a vibration generator (13) interacting with the first jaw (11), is fastened to a common pivotably suspended carrier (6), a parallel crank mechanism being formed by a drive lever (26) for the pivotably suspended carrier (6) and by a pivoting lever (28) extending approximately parallel to the drive lever (26) and articulated on a fixed point (29) of the appliance, the said mechanism causing the vibration generator (13) to execute a rectilinear movement approximately at right angles to the first jaw (11) during the welding and pressing operation, characterised in that the lever (5) carrying the first jaw (11) and the carrier (6) carrying the vibration generator (13) can be driven independently of one another by means of shafts (7, 9) serving as pivot bearings, in that a contact point (24) between the first jaw (11) and the jaw of the vibration generator (13) and a point of engagement (23) on the lever (5) for the transmission of force for the pressure-welding operation are provided on the straight line of action (25) of the pressure force of the carrier (6), and in that for force transmission there is a pressure cylinder (22), the force of which can be transferred to the point of engagement (23) via a force transmission mechanism (18).

2. Appliance according to Claim 1, characterised in that the pressure cylinder (22) is fastened to the carrier (6).

3. Appliance according to Claims 1 and 2, characterised in that the force transmission mechanism is designed as a two-armed deflection lever (18) which is mounted on the carrier (6) so as to be pivotable about a pivot bearing (17) and of which one arm (19) is connected, via a connecting rod (21), to a piston-like or diaphragm-like adjusting element (32) of the pressure cylinder (22) and the other arm (16) interacts with a part (15, 51) which ensures connection to or bearing contact with the lever (5) carrying the first jaw (11).

4. Appliance according to one or more of Claims 1 to 3, characterised in that the bearing-contact part is designed as a nose-shaped extension (14) of the essentially Z-shaped lever (5), the said extension (14) being provided with a bearing shoulder (15).

5. Appliance according to one or more of Claims 1 to 3, characterised in that a roller (51) is provided between the bearing-contact part and one arm (16), and in that that arm (16) of the deflection lever (18) which interacts with it has a curved segment (52).

6. Appliance according to one or more of Claims 1 to 3, characterised in that the connecting part between the lever (5) and the arm (16) of the deflection lever (18) is designed as a connecting lever (47) linked via pivot points (48, 49).

7. Appliance according to Claims 1 and 2, characterised in that the pressure cylinder (22) is arranged concentrically relative to the line of action (25) of the pressure force on a leg (53) of the carrier (6) which faces away from the folding and pressure-welding tools (11, 12, 13).

8. Appliance according to one or more of Claims 1 to 7, characterised by an overshoot and fracture prevention means formed by a bolt (38) and by a spring (39) which surrounds the latter and which is supported at one end on the pivoting lever (26) mounted on the shaft (9) and at the other end on a keeper (37) keyed on the shaft (9).

## Revendications

1. Dispositif pour plier et fermer la tête d'une boîte pliante formée d'une bande de carton revêtue intérieurement d'une couche de matière plastique thermoplastique, respectivement d'une pièce découpée, dans une station de pliage et de soudage par pression (3) dont les outils de pliage et de soudage par pression se composent d'une paire de mâchoires (11, 12) mobiles l'une vers l'autre comme une tenaille, dont la première mâchoire (11) est fixée à un levier (5) monté de façon pivotante et dont l'autre mâchoire (12) est, en même temps qu'un générateur d'oscillations (13) coopérant avec la première mâchoire (11), fixée à un support (6) commun suspendu de façon pivotante, dans lequel un levier de commande (26) pour le support (6) suspendu de façon pivotante et un levier pivotant (28) s'étendant sensiblement parallèlement au levier de commande (26) et articulé à un point fixe (29) du dispositif forment un biellage parallèle qui force le générateur d'oscillations (13) à exécuter, pendant l'opération de soudage, respectivement de pressage, un mouvement rectiligne approximativement perpendiculaire par rapport à la première mâchoire (11), caractérisé en ce que le levier (5) portant la première mâchoire (11) et le support (6) portant le générateur d'oscillations (13) peuvent être entraînés indépendamment l'un de l'autre par l'intermédiaire d'arbres (7, 9) servant d'articulations d'oscillation, en ce qu'un point de contact (24) entre la première mâchoire (11) et la mâchoire du générateur d'oscillations (13) ainsi qu'un point d'attaque (23) du levier (5) pour l'application des forces pour l'opération de soudage par pression sont prévus sur la ligne droite (25) d'action des forces de pressage dans le support (6) et en ce que, pour l'application des forces, il est monté un cylindre pneumatique (22) dont la force peut être transmise au point d'attaque (23) par l'intermédiaire d'un mécanisme (18) de transmission des forces.

2. Dispositif suivant la revendication 1, caractérisé en ce que le cylindre pneumatique (22) est fixé au support (6).

3. Dispositif suivant les revendications 1 et 2, caractérisé en ce que le mécanisme de transmission des forces est réalisé sous la forme d'un levier de renvoi (18) à deux bras, monté pivotant autour d'un palier d'oscillation (17) sur le support (6), levier dont un bras (19) est relié par une tringlerie de liaison (21) à un organe de réglage (32), du type à piston ou à membrane, du cylindre pneumatique (22) et dont l'autre bras (16) coopère avec une pièce (15, 51) constituant la liaison, respectivement la butée, pour le levier (5) portant la première mâchoire (11).

4. Dispositif suivant une ou plusieurs des revendications 1 à 3, caractérisé en ce que la pièce de butée est réalisée sous la forme d'un prolongement (14) en forme de taquet, pourvu d'un épaulement de butée (15), du levier (5) présentant essentiellement la forme d'un Z.

5. Dispositif suivant une ou plusieurs des revendications 1 à 3, caractérisé en ce qu'il est prévu un galet (51) entre la pièce de butée et le premier bras (16) et en ce que le bras (16) du levier de renvoi (18) coopérant avec ce galet présente un segment de came (52).

6. Dispositif suivant une ou plusieurs des revendications 1 à 3, caractérisé en ce que la pièce de liaison entre le levier (5) et le bras (16) du levier de renvoi (18) est constituée par un levier de liaison (47) raccordé par l'intermédiaire d'articulations (48, 49).

7. Dispositif suivant les revendications 1 et 2, caractérisé en ce que le cylindre pneumatique (22) est monté concentriquement à la ligne d'action (25) des forces de pressage, sur une aile (53) du support (6) opposée aux outils de pliage et de soudage par pression (11, 12, 13).

8. Dispositif suivant une ou plusieurs des revendications 1 à 7, caractérisé par une sécurité de course excessive et de rupture formée par un boulon (38) et par un ressort (39) entourant ce dernier et s'appuyant d'une part sur le levier pivotant (26) monté sur l'arbre (9) et d'autre part sur un tenon d'entraînement (37) calé sur l'arbre (9).

FIG.1

2/4

FIG.2

FIG.3

FIG.4

0 133 196

FIG. 5

18

5

49

47

48

25

FIG. 6

17

16

51

15

23

5

52

11

14

24

13

25

5

FIG.7

53 22 23

15

6

5

14

25

7

0133196